# EUROPÄISCHE PATENTSCHRIFT

(11) **EP 3 499 470 B1**
(45) Veröffentlichungstag und Bekanntmachung des Hinweises auf die Patenterteilung: **08.06.2022**
(21) Anmeldenummer: 18205377.7
(22) Anmeldetag: 09.11.2018
(51) Int. Cl.: G07C 5/08, G05B 23/02

(54) **VERFAHREN ZUR ZUSTANDSBASIERTEN INSTANDHALTUNG EINER ZUGANGSVORRICHTUNG**
METHOD FOR STATUS BASED MAINTENANCE OF ACCESS DEVICE
PROCÉDÉ DE MAINTENANCE EN FONCTION DE L'ÉTAT D'UN DISPOSITIF D'ACCÈS

(30) Priorität: 14.12.2017 DE 102017130002
(43) Veröffentlichungstag der Anmeldung: 19.06.2019
(73) Patentinhaber: Bode - Die Tür GmbH, 34123 Kassel (DE)
(72) Erfinder: Andler, Daniel, 34266 Niestetal (DE)
(74) Vertreter: Patentanwälte Bauer Vorberg Kayser

(56) Entgegenhaltungen:
- DE-T2- 60 030 758
- US-A1- 2006 230 313

## Beschreibung

Die Erfindung betrifft ein Verfahren zur zustandsbasierten Instandhaltung einer Zugangsvorrichtung eines Fahrzeugs.

Grundsätzlich erfolgt bei praktisch allen technischen Vorrichtungen mit zunehmender Betriebsdauer eine Degradation, welche über kurz oder lang zu einem Ausfall und damit dazu führt, dass die Vorrichtung insgesamt oder wesentliche Teile der Vorrichtung repariert oder ausgetauscht werden müssen, bevor ein Weiterbetrieb der Vorrichtung möglich und erlaubt ist. Besonders ungünstig ist ein solcher Ausfall, wenn er überraschend auftritt und damit sowohl den laufenden Betrieb unterbricht als auch für die Dauer der Reparatur oder des Austausches die Verwendung einer Ersatzvorrichtung zur Aufrechterhaltung des Betriebs erfordert. Sowohl die fehlende Antizipierbarkeit solcher Ausfälle als auch die resultierende Notwendigkeit, ein entsprechend großes Reservoir an Ersatzvorrichtungen vorzuhalten, führt zu hohen Kosten. Diese Problematik gilt auch und insbesondere im Bereich von Fahrzeugen des öffentlichen Personenverkehrs und dort speziell bezogen auf Zugangsvorrichtungen wie Tür- und Schiebetrittsysteme.

Dem obigen Problem wird einerseits versucht zu begegnen, indem betriebszeitmäßig bestimmte Serviceintervalle vorgesehen sind, nach denen jeweils einzelne Komponenten gewartet oder ausgetauscht werden sollen. Der bei der Berechnung der Serviceintervalle erforderliche Sicherheitsfaktor führt aber bei einem wirksamen Verhindern von Ausfällen dazu, dass solche Wartungen tendenziell zu oft stattfinden und auch Teile ausgetauscht werden, welche an sich noch geraume Zeit vor einem Ausfall eingesetzt werden könnten.

Da die oben beschriebenen Degradationen regelmäßig auf an sich schleichend voranschreitende Vorgänge zurückgehen gibt es andererseits das Bestreben, durch Messung und Auswertung dieser schleichenden Vorgänge eine Vorhersage über einen drohenden Ausfall zu erhalten und damit in der Lage zu sein, die fragliche Komponente kurz vor dem Ausfall planmäßig warten oder austauschen zu können.

Die DE 600 30 758 T2 aus dem Stand der Technik offenbart ein Stadtbahnfahrzeug mit einem vorausschauenden Diagnosesystem für eine motorbetriebene automatisierte Tür um eine zustandsbasierte Wartung zu ermöglichen. Das Stadtbahnfahrzeug weist ein automatisiertes Türsystem, mindestens eine Datenerfassungskarte, ein Datenerfassungsprogramm, einen Exponentialglättungsalgorithmus und ein neuronales Netzwerk auf. Der Wartungsbedarf wird durch die Erfassung verschiedener Parameter der Türsystems, die Berechnung des aktuellen Energie- und Zeitverbrauchs aus diesen Parametern und die Bestimmung der Verschlechterungsrate auf der Grundlage des aktuellen Energie- und Zeitverbrauchs des Türsystems im Vergleich mit einem historischen Energie- und Zeitverbrauch ermittelt. Basierend auf der Verschlechterungsrate kann die Wartung nach Bedarf geplant werden.

Das aus dem Stand der Technik bekannte amerikanische Patent US 6,636,814 B1, von welchem die vorliegende Erfindung als nächstkommend ausgeht, beschreibt ein solches prädiktives Diagnosesystem für ein motorgetriebenes automatisches Türsystem. Das Betriebsverhalten des Türsystems wird erfasst und der Energie- und Zeitverbrauch im Betrieb ermittelt. Diese Verbrauchsdaten werden mit historischen Verbrauchsdaten verglichen und basierend auf diesem Vergleich wird die Degradierungsrate des Türsystems ermittelt mit dem Ziel, passgenauere Servicezeitpunkte bestimmen zu können. Speziell ist hier vorgesehen, ein künstliches neuronales Netz dadurch zu trainieren, dass möglichst viele Versuchsreihen mit Exemplaren von Türsystem gefahren werden. Auf diese Weise kann das künstliche neuronale Netz Ausfallmuster selbständig erlernen und erkennen, ohne dass diese dem neuronalen Netz als solche identifiziert vorgegeben werden müssten.

Nachteilig an diesem Ansatz ist jedoch, dass in Abhängigkeit von den Eigenschaften des Türsystems und z. B. wegen einer statistisch geringen Häufigkeit von einzelnen Mustern eine sehr lange Reihe von Versuchen unter einer großen Bandbreite von Randbedingungen gefahren werden muss, um eine ausreichende Datenbasis für die relevanten Muster zu erhalten. Das ist wiederum besonders dann nachteilig, wenn die relevanten Vorrichtungen teuer in der Herstellung und in der Erprobung sind, da dann diese zusätzlichen Aufwände möglichen Gewinnen aus genaueren Wartungsintervallen gegenübergestellt werden müssen.

Daher besteht die Aufgabe der vorliegenden Erfindung darin, Verfahren zur zustandsbasierten Instandhaltung hinsichtlich der Bestimmung des relevanten Verhaltens zeit- und materialeffizienter zu gestalten.

Bezogen auf ein Verfahren zur zustandsbasierten Instandhaltung einer Zugangsvorrichtung eines Fahrzeugs mit den Merkmalen des Oberbegriffs von Anspruch 1 wird diese Aufgabe durch die kennzeichnenden Merkmale des Anspruchs 1 gelöst.

Wesentlich für die Erfindung ist die Erkenntnis, dass die Daten, welche bei der Konstruktion der Zugangsvorrichtung angefallen sind, für die analytische Bestimmung des Verhaltens der Zugangsvorrichtung verwendet werden können. Auf diese Weise kann ein Simulationsmodell für die Zugangsvorrichtung oder ein entsprechendes Grundgerüst im Wesentlichen errechnet werden, wodurch etwaig noch sinnvolle Mess- und Erprobungsreihen jedenfalls viel kürzer und nur in geringerer Zahl erforderlich sind.

Das erfindungsgemäße Verfahren dient der zustandsbasierten Instandhaltung einer Zugangsvorrichtung eines Fahrzeugs. Bei diesem Fahrzeug kann es sich um ein Fahrzeug des öffentlichen Personenverkehrs handeln. Gemäß dem erfindungsgemäßen Verfahren umfasst die Zugangsvorrichtung ein bewegliches Element und einen elektrischen Antrieb zum Verstellen des beweglichen Elements und ist an dem Fahrzeug befestigt, wobei der Antrieb mit Steuersignalen angesteuert wird. Erfindungsgemäß werden basierend auf einem erfassten Zustand der Zugangsvorrichtung tatsächliche Zustandssignale zur Beschreibung des Zustands erzeugt, wobei die Steuersignale und die tatsächlichen Zustandssignale auf ein physikalisches Simulationsmodell zur rechnerischen Simulation der Zugangsvorrichtung und zur Ermittlung erwarteter zukünftiger Zustandssignale angewandt werden. Das Simulationsmodell dient der Simulation und der Modellierung physikalischer Zustände, ist aber nicht selbst physikalisch, da es aus Daten ggf. in Kombination mit Algorithmen besteht. Der Ausdruck tatsächliche Zustandssignale ist hier so zu verstehen, dass es sich um Zustandssignale zur Beschreibung eines erfassten und damit tatsächlichen Zustands handelt. Die ermittelten Zustandssignale hingegen betreffen einen Zeitpunkt, welcher potenziell nach demjenigen liegt, für den die tatsächlichen Zustandssignale erzeugt wurden, welcher frühere Zeitpunkt also dem erfassten Zustand entspricht. Gemäß dem erfindungsgemäßen Verfahren wird basierend auf einem Vergleich zwischen den tatsächlichen Zustandssignalen und den zugehörigen erwarteten Zustandssignalen ein Instandhaltungszustand der Zugangsvorrichtung bestimmt. Dieser Instandhaltungszustand kann beliebig differenziert sein. So kann es sein, dass dieser Instandhaltungszustand einen von lediglich zwei möglichen Zuständen annehmen kann, z. B. "Wartung erforderlich" und "Wartung nicht erforderlich". Ebenso kann es sein, dass der Instandhaltungszustand eine projizierte Zeit bis zu einem Ausfall, ggf. zusammen mit einer Wahrscheinlichkeits- oder Genauigkeitsabschätzung umfasst.

Das erfindungsgemäße Verfahren ist, dadurch gekennzeichnet, dass das Simulationsmodell aus Konstruktionsdaten zur Beschreibung der Zugangsvorrichtung erzeugt wurde. Mit anderen Worten handelt es sich um Daten, ausgehend von denen die Zugangsvorrichtung ganz oder teilweise hergestellt werden könnte oder tatsächlich hergestellt wurde. Eine solche Herstellung ist ganz allgemein zu verstehen und kann den Zusammenbau, das Zusammenfügen oder das sonstige Verbinden von Einzelteilen umfassen. Diese Einzelteile bilden zumindest einen Teil der Zugangsvorrichtung und es kann sein, dass für diese Einzelteile charakterisierende Daten in den Konstruktionsdaten bereitgestellt werden. Ebenso kann es sein, dass basierend auf Vorgaben in den Konstruktionsdaten entsprechend spezifizierte Einzelteile hergestellt und dann zusammengefügt wurden.

Bei der Zugangsvorrichtung kann es sich insbesondere um ein Türsystem handeln, wobei dann das bewegliche Element ein Türflügel sein kann. Ebenso kann es sich bei der Zugangsvorrichtung um ein Schiebetrittsystem handeln, wobei in diesem Fall das bewegliche Element ein Schiebetritt sein kann.

Bei dem Simulationsmodell kann es sich um beliebige Daten, einschließlich spezieller formelhafter Beziehungen und spezieller numerischer Ansätze handeln, welche der rechnerischen Simulation der Zugangsvorrichtung dienen. Dabei reicht es aus, dass nur bestimmte Merkmale oder Messgrößen der Zugangsvorrichtung simuliert werden. Ebenso ist bei dieser Simulation nicht grundsätzlich eine bestimmte erzielte Genauigkeit erforderlich. Das Simulationsmodell kann einerseits festgelegte Berechnungsalgorithmen umfassen, weiche dann lediglich durch variable Daten parametrisiert werden. Das Simulationsmodell kann aber auch sowohl hinsichtlich seiner Parameter als auch der Berechnungsansätze variabel sein. Das kann sowohl die Art betreffen, wie bestimmte physikalischen Vorgänge rechnerisch nachgebildet werden, als auch die Auswahl von numerischen Lösungsansätzen für diese Nachbildungen betreffen.

Grundsätzlich kann es sein, dass das Simulationsmodell nur aus den Konstruktionsdaten erzeugt wurde, dass also keinerlei Messungen oder Versuche an einer realen Zugangsvorrichtung in das Simulationsmodell eingeflossen sind. Gemäß einer bevorzugten Ausführungsform des Verfahrens ist jedoch vorgesehen, dass das Simulationsmodell durch Messungen an einem Exemplar der Zugangsvorrichtung angepasst wurde, indem an dem Exemplar der Zugangsvorrichtung vor Befestigung an dem Fahrzeug Messungen durchgeführt wurden. Die Bezugnahme auf ein Exemplar der Zugangsvorrichtung verdeutlicht, dass die Messungen oder Versuche nicht notwendigerweise an derselben Zugangsvorrichtung - im Sinne desselben Exemplars - durchgeführt wurden, dessen Antrieb gemäß dem vorschlagsgemäßen Verfahren mit Steuersignalen angesteuert wird und dessen Zustand zum Erzeugen der Zustandssignale erfasst wird. Es reicht also aus, dass die Messungen oder Versuche an einer gleichen Zugangsvorrichtung durchgeführt wurden.

Grundsätzlich kann das Simulationsmodell aus den Konstruktionsdaten erzeugt werden, welche der Herstellung der Zugangsvorrichtung insgesamt zugrunde lagen. Hier liegen also keine separaten Konstruktionsdaten für einzelne Teile der Zugangsvorrichtung vor. Gemäß einer weiteren bevorzugten Ausführungsform des Verfahrens ist andererseits vorgesehen, dass die Konstruktionsdaten eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells die Kombination der jeweiligen Elementsimulationsmodelle der Konstruktionselemente umfasst. In diesem Fall ist es weiter bevorzugt, dass die Zugangsvorrichtung Bauelemente aufweist, welche den Konstruktionselementen entsprechen. Mit anderen Worten wird das Simulationsmodell nicht ausgehend von den Konstruktionsdaten insgesamt erstellt, sondern zumindest teilweise von den Elementsimulationsmodellen der Konstruktionselemente, welche Bestandteil der Konstruktionsdaten sind. Die den Konstruktionselementen - als virtuelle Elemente in den Konstruktionsdaten - entsprechenden realen Bauelemente sind umfasst von der realen Zugangsvorrichtung. Durch diese bevorzugte Ausführungsform wird die Komplexität bei der Bestimmung des Simulationsmodells verringert, weil auf die jeweiligen Modelle der einzelnen Bestandteile zurückgegriffen werden kann.

Eine bevorzugte Ausführungsform des Verfahrens ist dadurch gekennzeichnet, dass zumindest einige der Elementsimulationsmodelle durch Anwendung von mechanischen und/oder elektrischen Formeln auf Elementkonstruktionsdaten des Konstruktionselements aus einem Programm für computergestützten Entwurf erhalten wurden. Mit anderen Worten beruhen die Elementsimulationsmodelle nicht auf Messungen oder Versuchen an den realen Bauelementen, sondern auf Berechnungen basierend auf den Eigenschaften des nur virtuellen Konstruktionselements. Auf diese Weise kann ein Elementsimulationsmodell verwendet werden noch bevor ein entsprechendes reales Bauelement hergestellt wurde. Bei dem obigen Programm kann es sich um ein Programm für computergestützten mechanischen und/oder elektrischen Entwurf handeln.

Grundsätzlich kann die Anwendung der Steuersignale und der tatsächlichen Zustandssignale auf das Simulationsmodell und die Ermittlung der erwarteten zukünftigen Zustandssignale zu beliebiger Zeit erfolgen. Gemäß einer bevorzugten Ausführungsform des Verfahrens ist jedoch vorgesehen, dass in einem Überwachungszeitraum während eines laufenden Betriebs der Zugangsvorrichtung die Steuersignale und die tatsächlichen Zustandssignale auf das Simulationsmodell zur rechnerischen Simulation der Zugangsvorrichtung und zur Ermittlung erwarteter zukünftiger Zustandssignale angewandt werden und der Instandhaltungszustand der Zugangsvorrichtung bestimmt wird. Somit findet insbesondere die rechnerische Simulation der Zugangsvorrichtung während des laufenden Betriebs der Zugangsvorrichtung statt. Auf diese Weise kann zeit- und ortsnah auf eine Degradation reagiert werden. Der Überwachungszeitraum liegt vorzugsweise auch während eines laufenden Fahrbetriebs des Fahrzeugs.

Grundsätzlich kann das Erzeugen der Steuersignale und die Anwendung auf das Simulationsmodell insbesondere zur Ermittlung der erwarteten zukünftigen Zustandssignale in ein und derselben Rechenvorrichtung erfolgen. Diese Vorgänge können aber ebenso auf prinzipiell beliebig viele einzelne Rechenvorrichtungen verteilt werden. Gemäß einer weiteren bevorzugten Ausführungsform des Verfahrens ist speziell vorgesehen, dass das Fahrzeug eine elektronische Steuervorrichtung zur Ansteuerung der Zugangsvorrichtung mit den Steuersignalen sowie eine mit der Steuervorrichtung über ein Netzwerk verbundene Zentralrecheneinheit aufweist, dass die Steuersignale und die tatsächlichen Zustandssignale über das Netzwerk an die Zentralrecheneinheit übertragen werden und dass die Zentralrecheneinheit dazu eingerichtet ist, die Steuersignale und die tatsächlichen Zustandssignale auf das Simulationsmodell zur Ermittlung der erwarteten zukünftigen Zustandssignale anzuwenden und den Instandhaltungszustand der Zugangsvorrichtung zu bestimmen. Bevorzugt handelt es sich bei dem Netzwerk um ein lokales Netzwerk. Alternativ oder zusätzlich kann es sich um ein drahtloses Netzwerk handeln. Unter einem lokalen Netzwerk ist hier eine beliebige, insbesondere auch drahtlose, Verbindung zwischen zwei verschiedenen elektronischen Vorrichtungen zu verstehen. Mit anderen Worten geht das lokale Netzwerk über eine rein vorrichtungsinterne datentechnische Verbindung hinaus. Dabei kann das lokale Netzwerk eine beliebige Topologie aufweisen und insbesondere auch unter der lediglichen Verbindung von zwei Netzwerkknoten bestehen. Bei einem drahtlosen Netzwerk im vorliegenden Sinne kann es sich auch um ein Netzwerk handeln, welches lediglich teilweise eine drahtlose Übertragung vorsieht. Es kann sich bei dem drahtlosen Netzwerk auch um ein Mobilfunknetzwerk handeln.

Grundsätzlich können die Zustandssignale auf beliebige Art und Weise zustande kommen. Eine bevorzugte Ausführungsform des Verfahrens ist dadurch gekennzeichnet, dass das Fahrzeug eine Messanordnung zum Erzeugen von Messsignalen basierend auf einer Messung an der Zugangsvorrichtung aufweist. Dabei kann es sich um beliebige Arten von Messungen und damit insbesondere um physikalische, mechanische oder elektrische Messungen handeln. Bevorzugt ist weiter, dass die Zustandssignale die Messsignale zumindest teilweise umfassen. Mit anderen Worten können solche Messsignale auch als solche als Zustandssignale verstanden werden. Alternativ oder zusätzlich kann es sein, dass die Zustandssignale zumindest teilweise basierend auf den Messsignalen erzeugt werden, und zwar insbesondere durch die Steuervorrichtung. In diesem Falle entsprechen zumindest einige Zustandssignale einer Weiterverarbeitung oder Auswertung der Messsignale.

Die obigen Zustandssignale können auch zumindest indirekt zur Erzeugung der Steuersignale verwendet werden, beispielsweise im Rahmen eines Regelkreises. Entsprechend ist eine weitere bevorzugte Ausführungsform des Verfahrens dadurch gekennzeichnet, dass auf der Steuervorrichtung ein Steuerprogramm abläuft, welches basierend auf Rückkopplungssignalen die Steuersignale zur Ansteuerung des Antriebs erzeugt. Diese Rückkopplungssignale können von den tatsächlichen Zustandssignalen umfasst sein. Ebenso kann es sich bei den Rücckopplungssignalen um die obigen Messsignale handeln, sodass basierend auf den Messsignalen die Steuersignale zur Ansteuerung des Antriebs erzeugt werden. Bevorzugt ist ebenso, dass die Rückkopplungssignale ein Kodiersignal zur Angabe einer Position des beweglichen Elements umfassen oder aus dem Kodiersignal bestehen.

Grundsätzlich kann für jede Steuervorrichtung eine separate Zentralrecheneinheit vorgesehen sein. Gemäß einer bevorzugten Ausführungsform des Verfahrens ist hingegen vorgesehen, dass das Fahrzeug eine Mehrzahl von an dem Fahrzeug befestigten Zugangsvorrichtungen mit einer jeweiligen Steuervorrichtung umfasst und dass die Steuersignale und die tatsächlichen Zustandssignale der Mehrzahl von Zugangsvorrichtungen über das lokale Netzwerk an die Zentralrecheneinheit zur Ermittlung der jeweiligen erwarteten zukünftigen Zustandssignale und zur Bestimmung des Instandhaltungszustands der jeweiligen Zugangsvorrichtung übertragen werden. In diesem Fall ist eine einzelne Zentralrecheneinheit also mehreren Steuervorrichtungen zugeordnet. Vorzugsweise ist die Zentralrecheneinheit an dem Fahrzeug angeordnet.

Es kann sein, dass die erwarteten zukünftigen Zustandssignale im Wesentlichen synchron zu den tatsächlichen Zustandssignalen ermittelt werden. Regelmäßig wird aber die erforderliche Rechenzeit zur Ermittlung der erwarteten zukünftigen Zustandssignale länger sein als die Zeit zur Erzeugung der entsprechenden tatsächlichen Zustandssignale. Daher ist gemäß einer weiteren bevorzugten Ausführungsform des Verfahrens vorgesehen, dass die Ermittlung der erwarteten zukünftigen Zustandssignale getaktet erfolgt, sodass die Steuersignale und die tatsächlichen Zustandssignale während einer Abfolge von Eingangszeitintervallen angewandt und die erwarteten zukünftigen Zustandssignale während einer Abfolge von Ausgangszeitintervallen ermittelt werden und dass die Ausgangszeitintervalle jeweils zeitversetzt zu den entsprechenden Eingangszeitintervallen liegen. Mit anderen Worten erfolgt die - ausgabeseitige - Ermittlung der erwarteten zukünftigen Zustandssignale zeitversetzt zu der - eingabeseitigen - Anwendung der Steuersignale und der tatsächlichen Zustandssignale. Bevorzugt ist weiter, dass die Ausgangszeitintervalle nicht überlappend zu den Eingangszeitintervallen liegen. Dieser Zeitversatz trägt also der für die Ermittlung der erwarteten zukünftigen Zustandssignale erforderlichen Rechenzeit Rechnung.

Grundsätzlich kann im Wesentlichen eine kontinuierliche Anwendung der Steuersignale und der tatsächlichen Zustandssignale auf das physikalische Simulationsmodell erfolgen, sodass die erwarteten zukünftigen Zustandssignale im Wesentlichen für eine jeweils kontinuierliche Folge der Steuersignale und der tatsächlichen Zustandssignale ermittelt werden. In der Regel ist eine solche kontinuierliche Beobachtung für die Feststellung einer sich anbahnenden Degradation nicht erforderlich. Vielmehr reicht es meist, eine solche Beobachtung lediglich in bestimmten Zeitabständen und für ein vergleichsweise kurzes Zeitintervall durchzuführen. Daher ist eine bevorzugte Ausführungsform des Verfahrens dadurch gekennzeichnet, dass zwischen den Eingangszeitintervallen der Abfolge der Eingangszeitintervalle jeweilige zeitliche Pausenabstände vorgesehen sind und dass für die Steuersignale und die tatsächlichen Zustandssignale während dieser Pausenabstände eine Anwendung auf das Simulationsmodell unterbleibt. Das Vorsehen solcher Pausenabstände ist insbesondere dann vorteilhaft, wenn - wie oben beschrieben - die Anwendung auf das rechnerische Simulationsmodell deutlich länger dauert als die Erzeugung der tatsächlichen Zustandssignale, da ohne solche Pausenabstände der zeitliche Versatz zwischen der Erzeugung der tatsächlichen Zustandssignale und der Ermittlung der - den tatsächlichen Zustandssignalen entsprechenden - erwarteten zukünftigen Zustandssignale immer größer wird. Hier ist es weiter bevorzugt, dass die jeweilige Dauer der Pausenabstände die jeweilige Dauer der Eingangszeitintervalle übersteigt.

Eine solche getaktete Herangehensweise erleichtert auch die Berücksichtigung mehrerer Zugangsvorrichtungen durch eine einzelne Zentralrecheneinheit. Daher ist eine weitere bevorzugte Ausführungsform des Verfahrens dadurch gekennzeichnet, dass für die Mehrzahl von an dem Fahrzeug befestigten Zugangsvorrichtungen jeweils unterschiedliche, vorzugsweise nichtüberlappende, Abfolgen von Eingangszeitintervallen vorgesehen sind. Mit anderen Worten wird nach einem Eingangszeitintervall von einer Zugangsvorrichtung zur nächsten für die Anwendung der Steuersignale und der tatsächlichen Zustandssignale gewechselt. Es ist also bevorzugt, dass die Übertragung der Steuersignale und der tatsächlichen Zustandssignale an die Zentralrecheneinheit von den Steuervorrichtungen jeweils zeitversetzt erfolgt.

Grundsätzlich kann eine höhere Genauigkeit der erwarteten Zustandssignale durch eine größere Komplexität des Simulationsmodells erreicht werden, was jedoch zu höherem Rechenaufwand und bei gleicher Prozessorleistung zu einer längeren Berechnungszeit führt. Gemäß einer bevorzugten Ausführungsform des Verfahrens ist vorgesehen, dass die Ermittlung der erwarteten zukünftigen Zustandssignale durch das physikalische Simulationsmodell länger dauert als das Erzeugen der tatsächlichen Zustandssignale, sodass der Vergleich zwischen den tatsächlichen Zustandssignalen und den zugehörigen erwarteten Zustandssignalen zeitversetzt zum Erzeugen der tatsächlichen Zustandssignale erfolgt. Für das Vorhersagen ist ein solcher Zeitversatz aber regelmäßig unschädlich, da sich die entsprechenden Ausfälle üblicherweise schleichend ankündigen und eine Wartung ohnehin nicht sofort erfolgen kann, sondern zumindest das Erreichen einer entsprechenden Betriebsstätte durch das Fahrzeug voraussetzt. Hier ist weiter bevorzugt, dass die tatsächlichen Zustandssignale in der Zentralrecheneinheit bis zum Ermitteln der zugehörigen erwarteten Zustandssignale gespeichert werden.

Grundsätzlich kann es sich bei den Steuersignalen um beliebige Signale zur Ansteuerung des Antriebs handeln. So kann es sich etwa um digitale Signale zur Ansteuerung des Antriebs handeln. Gemäß einer weiteren bevorzugten Ausführungsform des Verfahrens ist vorgesehen, dass die Steuersignale eine Motorspannung zum Anlegen an den elektrischen Antrieb umfassen. Vorzugsweise bestehen die Steuersignale aus der Motorspannung bestehen.

Ebenso kann es sich bei den Zustandssignalen grundsätzlich um beliebige Arten von Signalen handeln. Hier ist es bevorzugt, dass die Zustandssignale einen durch den elektrischen Antrieb fließenden Motorstrom umfassen.

Eine bevorzugte Ausführungsform des Verfahrens ist dadurch gekennzeichnet, dass der erfasste Zustand der Zugangsvorrichtung einen in Bewegungsphasen unterteilten Bewegungsablauf des beweglichen Elements umfasst und dass der Vergleich zwischen dem tatsächlichen Zustandssignal und dem erwarteten zukünftigen Zustandssignal basierend auf jeweils unterschiedlichen charakteristischen Signalmerkmalen für mindestens eine Bewegungsphase erfolgt. Wenn ein charakteristischer Verlauf eines Signals über eine Zeitspanne erwartet wird, so kann eine Abweichung zwischen dem tatsächlichen Zustandssignal und dem erwarteten zukünftigen Zustandssignal präziser erkannt werden. Es kann beispielsweise sein, dass der Bewegungsablauf in eine Beschleunigungsphase, eine kontinuierliche Phase und eine Bremsphase des beweglichen Elements unterteilt ist. Indem auf typische Verläufe bei dem jeweiligen Phasenübergang geachtet wird, kann z. B. der verzögerte oder verfrühte Beginn einer solchen Phase wirksam erkannt werden. Ein solcher Ansatz ist einfacher umzusetzen als etwa ein umfassender Vergleich über die gesamte Zeitspanne des Bewegungsablaufs.

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch ein Fahrzeug mit einer Zugangsvorrichtung zur Ausführung eines Ausführungsbeispiels des vorschlagsgemäßen Verfahrens und
- Fig. 2: schematisch den zeitlichen Ablauf bei der Durchführung des vorschlagsgemäßen Verfahrens gemäß dem Ausführungsbeispiel der Fig. 1.

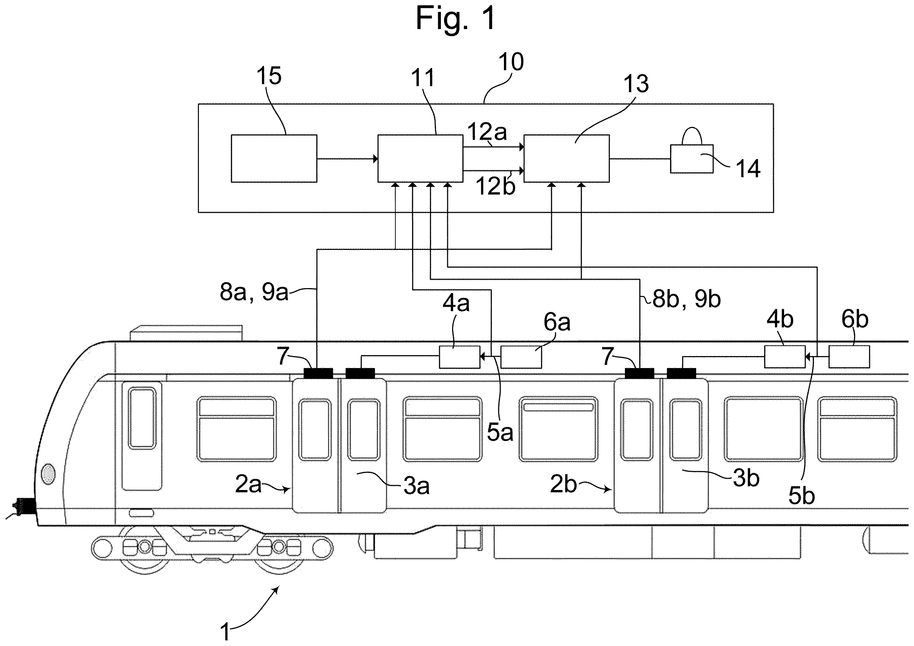

Bei dem in der Fig. 1 dargestellten Fahrzeug 1 handelt es sich um ein Schienenfahrzeug des öffentlichen Personenverkehrs mit einer Vielzahl von an dem Fahrzeug 1 befestigten Fahrgasttüren, von denen hier zwei beispielhaft als Zugangsvorrichtungen 2a, b wiedergegeben sind. Jede Zugangsvorrichtung 2a, b umfasst jeweils ein bewegliches Element 3a, b, bei welchem es sich hier um einen Türflügel handelt, und einen elektrischen Antrieb 4a, b - hier jeweils ein Elektromotor - zum Verstellen des Türflügels.

Die elektrischen Antriebe 4a, b werden jeweils mit Steuersignalen 5a, b angesteuert, welche von einer jeweiligen elektronischen Steuervorrichtung 6a, b des Fahrzeugs 1 ausgehen. Im vorliegenden Fall handelt es sich bei den Steuersignalen um eine an den Antrieb 4a, b angelegte Motorspannung. Das Fahrzeug weist ferner eine Messanordnung 7 mit einer Messvorrichtung an jeder Zugangsvorrichtung 2a, b auf, welche Messvorrichtungen jeweilige Messsignale 8a, b erzeugen, bei welchen Messsignalen 8a, b es sich hier jeweils um einen Motorstrom handelt. Diese Messsignale 8a, b bilden hier gleichzeitig tatsächliche Zustandssignale 9a, b, die auf diese Weise einen erfassten Zustand der jeweiligen Zugangsvorrichtung 2a, b wiedergeben.

Beabstandet zu dem Fahrzeug 1 angeordnet und nachrichtentechnisch mit einer hier nicht dargestellten Funkverbindung gekoppelt ist eine Zentralrecheneinheit 10, welcher die Steuersignale 5a, b und die tatsächlichen Zustandssignale 9a, b entsprechend den Messsignalen 8a, b zugeführt werden. In dieser Zentralrecheneinheit 10 findet eine Simulation der Zugangsvorrichtung 1 und ihres Verhaltens statt. Dabei werden die Steuersignale 5a, b und die tatsächlichen Zustandssignale 9a, b auf ein physikalisches Simulationsmodell 11 angewandt, welche der rechnerischen Simulation der Zugangsvorrichtung 1 dient. Diese Simulation kann auf im Prinzip beliebige Art und Weise erfolgen und speziell unter Verwendung prinzipiell beliebiger Algorithmen und numerischer Ansätze. Die Anwendung dient ebenso der Ermittlung erwarteter zukünftiger Zustandssignale 12a, b. Bei dem Simulationsmodell 11 handelt es sich um Daten, welche in der Zentralrecheneinheit 10 hinterlegt sind. Das Simulationsmodell 11 wurde zunächst aus Konstruktionsdaten 15 erzeugt, wobei basierend auf einem ersten Teil der Konstruktionsdaten 15 die Zugangsvorrichtungen 2a, b hergestellt wurde. Die Konstruktionsdaten 15 wiederum setzen sich aus einzelnen, hier nicht dargestellten Konstruktionselementen zusammen, und zwar speziell für jedes einzelne elektrische oder mechanische Bauteil der Zugangsvorrichtungen 2a, b. Das Simulationsmodell 11 wurde dann durch die dieser Kombination der Konstruktionselemente entsprechenden Elementsimulationsmodelle erzeugt.

Anschließend wurde das Simulationsmodell 11 durch Messungen an den hergestellten Exemplaren der Zugangsvorrichtungen 2a, b angepasst. Auch die Konstruktionsdaten 15 sind als in der Zentralrecheneinheit 10 hinterlegt dargestellt.

Die oben genannten, erwarteten zukünftigen Zustandssignale 12a, b werden mit den tatsächlichen Zustandssignalen 9a, b verglichen und je nach Ergebnis des Vergleichs wird ein Instandhaltungszustand der Zugangsvorrichtung 1 bestimmt. Dabei werden naturgemäß diejenigen Zustandssignale verglichen, welche sich auf den selben Zeitpunkt beziehen. Dieser Vergleichsvorgang ist in der Fig. 1 durch eine Vergleichsblock 13 und die Anzeige des Instandhaltungszustands als Ausgabeblock 14 schematisch dargestellt. Der Instandhaltungszustand kann entweder "OK" oder "fehlerhaft" sein. Bei einer lediglich geringen Abweichung zwischen den tatsächlichen Zustandssignalen 9a, b und den erwarteten zukünftigen Zustandssignalen 12a, b ist der Instandhaltungszustand "OK". Liegt eine wesentliche Abweichung vor, ist der Instandhaltungszustand "fehlerhaft".

Die oben beschriebenen Vorgänge, welche zu der Ermittlung der erwarteten zukünftigen Zustandssignale 12a, b, zu dem Erzeugen der tatsächlichen Zustandssignale 9a, b sowie zu dem Vergleich zwischen diesen, finden im laufenden Fahrbetrieb des Fahrzeugs 1 und damit während des Betriebs der Zugangsvorrichtungen 2a, b statt. Die Ermittlung der erwarteten zukünftigen Zustandssignale 12a, b nimmt aber eine Rechenzeit in Anspruch, welche gegenüber der Zeit für das Erlangen der tatsächlichen Zustandssignale 9a, b länger ist, sodass eine in der Fig. 1 nicht wiedergegeben Pufferung der tatsächlichen Zustandssignale 9a, b erfolgt, um eine Synchronizität zu den erwarteten zukünftigen Zustandssignalen 12a, b herzustellen.

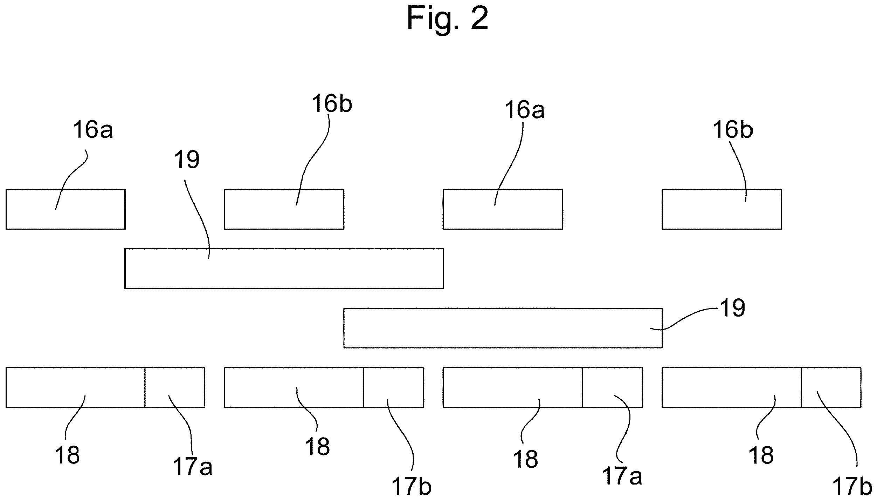

In der Fig. 2 ist dargestellt, wie bei diesem Ausführungsbeispiel erreicht wird, dass trotz dieser längeren Rechenzeit und der Überwachung von zwei Zugangsvorrichtungen 2a, b diese Synchronizität gewahr werden kann. Speziell ist eine erste Abfolge von Eingangszeitintervallen 16a für die erste Zugangsvorrichtung 2a und eine zweite Abfolge von Eingangszeitintervallen 16b für die zweite Zugangsvorrichtung 2b dargestellt, wobei sich die Darstellung dieser an sich längeren Abfolgen beispielhaft auf je zwei Eingangszeitintervalle 16a, b beschränkt. Während dieser Eingangszeitintervalle 16a, b - und beginnend mit diesen - liegen die Steuersignale 5a, b sowie die tatsächlichen Zustandssignale 9a, b der entsprechenden Zugangsvorrichtung 2a, b im Wesentlichen durch Messung oder Erzeugung bereits vor und werden auf das Simulationsmodell 11 angewandt. Durch die erforderliche Rechenzeit 18 - ebenfalls in der Fig. 2 dargestellt - werden die entsprechenden erwarteten zukünftigen Zustandssignale 12a für die erste Zugangsvorrichtung 2a und die erwarteten zukünftigen Zustandssignale 12b für die zweite Zugangsvorrichtung 2b aber erst während einer Abfolge von Ausgangszeitintervallen 17a, b erhalten, welche Ausgangszeitintervalle 17a, b entsprechend der Rechenzeit 18 zeitversetzt zu den entsprechenden Eingangszeitintervallen 16a, b liegen.

Entsprechend liegen zwischen aufeinanderfolgenden Eingangszeitintervallen 16a, b derselben Zugangsvorrichtung 2a, b Pausenabstände 19, welche ebenfalls in der Fig. 2 dargestellt sind. In diesen Pausenabständen 19 unterbleibt abwechselnd für die Steuersignale 5a und die tatsächlichen Zustandssignale 9a bzw. für die Steuersignale 5b und die tatsächlichen Zustandssignale 9b die Anwendung auf das Simulationsmodell 11. Stattdessen erfolgt die Anwendung der jeweils anderen - also der anderen Zugangsvorrichtung 2a, b - Steuersignale 5a, b und tatsächlichen Zustandssignale 9a, b auf das Simulationsmodell 11. Im Ergebnis erfolgt die Anwendung auf das Simulationsmodell 11 also nahezu kontinuierlich. Da die Übertragung der Steuersignale 5a, b und der tatsächlichen Zustandssignale 9a, b an die Zentralrecheneinheit 11 während der jeweiligen Eingangszeitintervalle 16a, b für die betreffende Zugangsvorrichtung 2a, b erfolgt, erfolgt diese für die unterschiedlichen Zugangsvorrichtungen 2a, b jeweils zeitversetzt.

## Patentansprüche

1. Verfahren zur zustandsbasierten Instandhaltung einer Zugangsvorrichtung (2a, b) eines Fahrzeugs (1), insbesondere eines Fahrzeugs (1) des öffentlichen Personenverkehrs, wobei die Zugangsvorrichtung (2a, b) ein bewegliches Element (3a, b) und einen elektrischen Antrieb (4a, b) zum Verstellen des beweglichen Elements (3a, b) umfasst und an dem Fahrzeug (1) befestigt ist, wobei der Antrieb (4a, b) mit Steuersignalen (5a, b) angesteuert wird, wobei basierend auf einem erfassten Zustand der Zugangsvorrichtung (2a, b) tatsächliche Zustandssignale (9a, b) zur Beschreibung des Zustands erzeugt werden, wobei die Steuersignale (5a, b) und die tatsächlichen Zustandssignale (9a, b) auf ein physikalisches Simulationsmodell (10) zur rechnerischen Simulation der Zugangsvorrichtung (1) und zur Ermittlung erwarteter zukünftiger Zustandssignale (12a, b) angewandt werden,
wobei basierend auf einem Vergleich zwischen den tatsächlichen Zustandssignalen (9a, b) und zugehörigen erwarteten Zustandssignalen (12a, b) ein Instandhaltungszustand der Zugangsvorrichtung (2a, b) bestimmt wird, und wobei das Simulationsmodell (11) aus Konstruktionsdaten (15) zur Beschreibung der Zugangsvorrichtung (2a, b) erzeugt wurde.

2. Verfahren nach Anspruch 1, wobei das Simulationsmodell (11) durch Messungen an einem Exemplar der Zugangsvorrichtung (2a, b) angepasst wurde, indem an dem Exemplar der Zugangsvorrichtung (2a, b) vor Befestigung an dem Fahrzeug (1) Messungen durchgeführt wurden.

3. Verfahren nach Anspruch 1 oder 2, wobei die Konstruktionsdaten (15) eine Kombination einzelner Konstruktionselemente aufweisen, dass den Konstruktionselementen ein jeweiliges Elementsimulationsmodell zur Beschreibung des Konstruktionselements zugeordnet ist und dass das Erzeugen des Simulationsmodells (11) die Kombination der jeweiligen Elementsimulationsmodelle der Konstruktionselemente umfasst.

4. Verfahren nach Anspruch 3, wobei zumindest einige der Elementsimulationsmodelle durch Anwendung von mechanischen und/oder elektrischen Formeln auf Elementkonstruktionsdaten des Konstruktionselements aus einem Programm für computergestützten Entwurf, insbesondere einem Programm für computergestützten mechanischen und/oder elektrischen Entwurf, erhalten wurden.

5. Verfahren nach einem der Ansprüche 1 bis 4, wobei dass in einem Überwachungszeitraum während eines laufenden Betriebs der Zugangsvorrichtung (2a, b), insbesondere während eines laufenden Fahrbetriebs des Fahrzeugs (1), die Steuersignale (5a, b) und die tatsächlichen Zustandssignale (9a, b) auf das Simulationsmodell (11) zur rechnerischen Simulation der Zugangsvorrichtung (2a, b) und zur Ermittlung erwarteter zukünftiger Zustandssignale (12a, b) angewandt werden und der Instandhaltungszustand der Zugangsvorrichtung (2a, b) bestimmt wird.

6. Verfahren nach Anspruch 5, wobei das Fahrzeug (1) eine elektronische Steuervorrichtung (6a, b) zur Ansteuerung der Zugangsvorrichtung (2a, b) mit den Steuersignalen (5a, b) sowie eine mit der Steuervorrichtung (6a, b) über ein Netzwerk, insbesondere lokales Netzwerk und/oder drahtloses Netzwerk, verbundene Zentralrecheneinheit (10) aufweist, dass die Steuersignale (5a, b) und die tatsächlichen Zustandssignale (9a, b) über das Netzwerk an die Zentralrecheneinheit (10) übertragen werden und dass die Zentralrecheneinheit (10) dazu eingerichtet ist, die Steuersignale (5a, b) und die tatsächlichen Zustandssignale (9a, b) auf das Simulationsmodell (11) zur Ermittlung der erwarteten zukünftigen Zustandssignale (12a, b) anzuwenden und den Instandhaltungszustand der Zugangsvorrichtung (2a, b) zu bestimmen.

7. Verfahren nach Anspruch 6, wobei das Fahrzeug (1) eine Messanordnung (7) zum Erzeugen von Messsignalen (8a, b) basierend auf einer Messung an der Zugangsvorrichtung (2a, b) aufweist, vorzugsweise, dass die Zustandssignale (9a, b) die Messsignale (8a, b) zumindest teilweise umfassend und/oder dass die Zustandssignale (9a, b) zumindest teilweise basierend auf den Messsignalen (8a, b), insbesondere durch die Steuervorrichtung (6a, b), erzeugt werden.

8. Verfahren nach Anspruch 6 oder 7, wobei auf der Steuervorrichtung (8a, b) ein Steuerprogramm abläuft, welches basierend auf Rückkopplungssignalen, welche vorzugsweise von den tatsächlichen Zustandssignalen (9a, b) umfasst sind, insbesondere basierend auf den Messsignalen (8a, b), die Steuersignale (5a, b) zur Ansteuerung des Antriebs (4a, b) erzeugt, weiter vorzugsweise, dass die Rückkopplungssignale ein Kodiersignal zur Angabe einer Position des beweglichen Elements (3a, b) umfassen, weiter insbesondere aus dem Kodiersignal bestehen.

9. Verfahren nach einem der Ansprüche 6 bis 8, wobei dass das Fahrzeug (1) eine Mehrzahl von an dem Fahrzeug (1) befestigten Zugangsvorrichtungen (2a, b) mit einer jeweiligen Steuervorrichtung (6a, b) umfasst und dass die Steuersignale (5a, b) und die tatsächlichen Zustandssignale (9a, b) der Mehrzahl von Zugangsvorrichtungen (2a, b) über das lokale Netzwerk an die Zentralrecheneinheit (10) zur Ermittlung der jeweiligen erwarteten zukünftigen Zustandssignale (12a, b) und zur Bestimmung des Instandhaltungszustands der jeweiligen Zugangsvorrichtung (2a, b) übertragen werden.

10. Verfahren nach einem der Ansprüche 1 bis 9, wobei die Ermittlung der erwarteten zukünftigen Zustandssignale (12a, b) getaktet erfolgt, sodass die Steuersignale (5a, b) und die tatsächlichen Zustandssignale (9a, b) während einer Abfolge von Eingangszeitintervallen (16a, b) angewandt und die erwarteten zukünftigen Zustandssignale (12a, b) während einer Abfolge von Ausgangszeitintervallen (17a, b) ermittelt werden und dass die Ausgangszeitintervalle (17a, b) jeweils zeitversetzt, vorzugsweise nicht überlappend, zu den entsprechenden Eingangszeitintervallen (16a, b) liegen.

11. Verfahren nach Anspruch 10, wobei zwischen den Eingangszeitintervallen (16a, b) der Abfolge der Eingangszeitintervalle (16a, b) jeweilige zeitliche Pausenabstände (19) vorgesehen sind, dass für die Steuersignale (5a, b) und die tatsächlichen Zustandssignale (9a, b) während dieser Pausenabstände (19) eine Anwendung auf das Simulationsmodell (11) unterbleibt, vorzugsweise, dass die jeweilige Dauer der Pausenabstände (19) die jeweilige Dauer der Eingangszeitintervalle (16a, b) übersteigt.

12. Verfahren nach Anspruch 11, wobei für die Mehrzahl von an dem Fahrzeug (1) befestigten Zugangsvorrichtungen (2) jeweils unterschiedliche, vorzugsweise nichtüberlappende, Abfolgen von Eingangszeitintervallen (16a, b) vorgesehen sind, insbesondere, dass die Übertragung der Steuersignale (5a, b) und der tatsächlichen Zustandssignale (9a, b) an die Zentralrecheneinheit (11) von den Steuervorrichtungen (6a, b) jeweils zeitversetzt erfolgt.

13. Verfahren nach einem der Ansprüche 1 bis 12, wobei die Ermittlung der erwarteten zukünftigen Zustandssignale (12a, b) durch das physikalische Simulationsmodell (11) länger dauert als das Erzeugen der tatsächlichen Zustandssignale (9a, b), sodass der Vergleich zwischen den tatsächlichen Zustandssignalen (9a, b) und den zugehörigen erwarteten Zustandssignalen (12a, b) zeitversetzt zum Erzeugen der tatsächlichen Zustandssignale (9a, b) erfolgt, vorzugsweise, dass die tatsächlichen Zustandssignale (9a, b) in der Zentralrecheneinheit (11) bis zum Ermitteln der zugehörigen erwarteten Zustandssignale (12a, b) gespeichert werden.

14. Verfahren nach einem der Ansprüche 1 bis 13, wobei die Steuersignale (5a, b) eine Motorspannung zum Anlegen an den elektrischen Antrieb (4a, b) umfassen, vorzugsweise aus der Motorspannung bestehen, und/oder dass die Zustandssignale einen durch den elektrischen Antrieb fließenden Motorstrom umfassen.

15. Verfahren nach einem der Ansprüche 1 bis 14, wobei der erfasste Zustand der Zugangsvorrichtung (2a, b) einen in Bewegungsphasen unterteilten Bewegungsablauf des beweglichen Elements (3a, b) umfasst und dass der Vergleich zwischen dem tatsächlichen Zustandssignal (9a, b) und dem erwarteten zukünftigen Zustandssignal (12a, b) basierend auf jeweils unterschiedlichen charakteristischen Signalmerkmalen für mindestens eine Bewegungsphase erfolgt.

## Claims

1. A method for the condition-based maintenance of an access device (2a, b) of a vehicle (1), in particular a vehicle (1) of the public transport system, wherein the access device (2a, b) comprises a mobile element (3a, b) and an electrical drive (4a, b) for adjusting the mobile element (3a, b) and is fastened to the vehicle (1), wherein the drive (4a, b) is controlled by control signals (5a, b), wherein actual condition signals (9a, b) are generated based on a detected condition of the access device (2a, b) in order to describe the condition, wherein the control signals (5a, b) and the actual condition signals (9a, b) are used on a physical simulation model (10) for the computer simulation of the access device (2a, b) and for determining expected future condition signals (12a, b),
wherein
a maintenance condition of the access device (2a, b) is determined on the basis of a comparison between the actual condition signals (9a, b) and respective expected condition signals (12a, b),
and wherein the simulation model (11) has been generated from construction data (15) for the description of the access device (2a, b).

2. The method according to claim 1, wherein
the simulation model (11) is adapted by measurements to a replica of the access device (2a, b), measurements being carried out on the replica of the access device (2a, b) before fastening to the vehicle (1).

3. The method according to claim 1 or 2, wherein
the construction data (15) comprise a combination of individual construction elements, a respective element simulation model is assigned to the construction elements to describe the construction element and the creation of the simulation model (11) comprises the combination of the respective element simulation models of the construction elements.

4. The method according to claim 3, wherein
at least some of the element simulation models have been obtained by the use of mechanical and/or electrical formulae for the element construction data of the construction element from a program for a computer-assisted draft, in particular a program for a computer-assisted mechanical and/or electrical draft.

5. The method according to any one of claims 1 to 4, wherein,
in a monitoring period during an ongoing operation of the access device (2a, b), in particular during an ongoing travel operation of the vehicle (1), the control signals (5a, b) and the actual condition signals (9a, b) are applied to the simulation model (11) for the computer simulation of the access device (2a, b) and for determining expected future condition signals (12a, b) and the maintenance condition of the access device (2a, b) is determined.

6. The method according to claim 5, wherein
the vehicle (1) comprises an electronic control device (6a, b) for controlling the access device (2a, b) with the control signals (5a, b) and a central computing unit (10) connected to a control device (6a, b) via a network, in particular a local network and/or wireless network, the control signals (5a, b) and the actual condition signals (9a, b) are transmitted via the network to the central computing computer unit (10) and the central computing unit (10) is configured to use the control signals (5a, b) and the actual condition signals (9a, b) on the simulation model (11) to determine the expected future condition signals (12a, b) and to determine the maintenance condition of the access device (2a, b).

7. The method according to claim 6, wherein
the vehicle (1) comprises a measurement arrangement (7) for generating measurement signals (8a, b) on the basis of a measurement on the access device (2a, b), the condition signals (9a, b) preferably being generated at least partially comprising the measurement signals (8a, b) and/or the condition signals (9a, b) being generated at least partially on the basis of the measurement signals (8a, b), in particular by means of the control device (6a, b).

8. The method according to claim 6 or 7, wherein
a control program runs on the control device (8a, b), which control program, on the basis of feedback signals which preferably consist of the actual condition signals (9a, b), in particular on the basis of the measurement signals (8a, b), generates the control signals (5a, b) for controlling the drive (4a, b), the feedback signals also preferably comprising only a coding signal to indicate a position of the mobile element (3a, b), also in particular consisting of the coding signal.

9. The method according to any one of claims 6 to 8, wherein
the vehicle (1) comprises a plurality of access devices (2a, b) fastened to the vehicle (1) together with a respective control device (6a, b) and the control signals (5a, b) and the actual condition signals (9a, b) of the plurality of access devices (2a, b) are transmitted via the local network to the central computing unit (10) to determine the respective expected future condition signals (12a, b) and to determine the maintenance condition of the respective access device (2a, b).

10. The method according to any one of claims 1 to 9, wherein
the determination of the expected future condition signals (12a, b) takes place in a cyclical manner, so that the control signals (5a, b) and the actual condition signals (9a, b) are used during a succession of input time intervals (16a, b) and the expected future condition signals (12a, b) are determined during a succession of output time intervals (17a, b) and the output time intervals (17a, b) are respectively offset in time, preferably not overlapping, with respect to the corresponding input time intervals (16a, b).

11. The method according to claim 10, wherein
time pause intervals (19) are provided respectively between the input time intervals (16a, b) of the succession of input time intervals (16a, b), an application on the simulation model (11) is omitted for the control signals (5a, b) and the actual condition signals (9a, b) during these pause intervals (19), the respective duration of the pause intervals (19) preferably exceeding the respective duration of the input time intervals (16a, b).

12. The method according to claim 11, wherein
different, preferably non-overlapping, successions of input time intervals (16a, b) are provided in each case for the plurality of access devices (2) fastened to the vehicle (1), in particular the transmission of the control signals (5a, b) and the actual condition signals (9a, b) taking place in each case offset in time to a central computing unit (11) from the control devices (6a, b).

13. The method according to claim 1 to 12, wherein
the determination of the expected future condition signals (12a, b) by means of the physical simulation model (11) lasts longer than the generation of the actual condition signals (9a, b), so that the comparison between the actual condition signals (9a, b) and the respective expected condition signals (12a, b) takes place offset in time with respect to the generation of the actual condition signals (9a, b), the actual condition signals (9a, b) preferably being stored in a central computing unit (11) until the determination of the respective expected condition signals (12a, b).

14. The method according to any one of claims 1 to 13, wherein the control signals (5a, b) comprise a motor voltage for applying to the electrical drive (4a, b), preferably consist of the motor voltage, and/or the condition signals comprise a motor current flowing through the electrical drive.

15. The method according to any one of claims 1 to 14, wherein
the detected condition of the access device (2a, b) comprises a movement sequence of the mobile element (3a, b) divided into movement phases and the comparison between the actual condition signal (9a, b) and the expected future condition signal (12a, b) takes place on the basis of, in each case, different characteristic signal features for at least one movement phase.

## Revendications

1. Procédé de maintenance basée sur l'état d'un dispositif d'accès (2a, b) d'un véhicule (1), en particulier d'un véhicule (1) de transport public de personnes, dans lequel le dispositif d'accès (2a, b) comprend un élément mobile (3a, b) et un entraînement électrique (4a, b) pour déplacer l'élément mobile (3a, b) et est fixé sur le véhicule (1), dans lequel l'entraînement (4a, b) est commandé par des signaux de commande (5a, b), dans lequel, en se basant sur un état détecté du dispositif d'accès (2a, b), des signaux d'état réel (9a, b) sont produits pour décrire l'état, dans lequel les signaux de commande (5a, b) et les signaux d'état réel (9a, b) sont appliqués sur un modèle de simulation physique (10) pour la simulation par calcul du dispositif d'accès (2a, b) et pour la détermination de signaux d'état futur attendus (12a, b), dans lequel en se basant sur une comparaison entre les signaux d'état réel (9a, b) et les signaux d'état attendus (12a, b) correspondants, un état de maintenance du dispositif d'accès (2a, b) est déterminé, et dans lequel le modèle de simulation (11) a été produit à partir de données de construction (15) pour décrire le dispositif d'accès (2a, b).

2. Procédé selon la revendication 1, dans lequel le modèle de simulation (11) a été adapté par des mesures sur un exemplaire du dispositif d'accès (2a, b), par le fait que des mesures ont été réalisées sur l'exemplaire du dispositif d'accès (2a, b) avant la fixation sur le véhicule (1).

3. Procédé selon la revendication 1 ou 2, dans lequel les données de construction (15) présentent une combinaison d'éléments de construction individuels, un modèle de simulation d'élément respectif étant attribué aux éléments de construction pour décrire l'élément de construction, et la production du modèle de simulation (11) comprend la combinaison des modèles de simulation d'élément respectifs des éléments de construction.

4. Procédé selon la revendication 3, dans lequel au moins quelques-uns des modèles de simulation d'élément ont été obtenus par application de formules mécaniques et/ou électriques sur des données de construction d'élément de l'élément de construction à partir d'un programme pour la conception assistée par ordinateur, en particulier un programme pour la conception mécanique et/ou électrique assistée par ordinateur.

5. Procédé selon l'une des revendications 1 à 4, dans lequel dans une période de surveillance pendant une marche en continu du dispositif d'accès (2a, b), en particulier pendant une marche continue du véhicule (1), les signaux de commande (5a, b) et les signaux d'état réel (9a, b) sont appliqués sur le modèle de simulation (11) pour la simulation par calcul du dispositif d'accès (2a, b) et pour la détermination de signaux d'état futur attendus (12a, b), et l'état de maintenance du dispositif d'accès (2a, b) est déterminé.

6. Procédé selon la revendication 5, dans lequel le véhicule (1) présente un dispositif de commande électronique (6a, b) pour commander le dispositif d'accès (2a, b) avec les signaux de commande (5a, b), ainsi qu'une unité centrale de calcul (10) reliée au dispositif de commande (6a, b) par un réseau, en particulier un réseau local et/ou un réseau sans fil, les signaux de commande (5a, b) et les signaux d'état réel (9a, b) étant transmis à l'unité centrale de calcul (10) par biais du réseau, et l'unité centrale de calcul (10) étant conçue pour appliquer les signaux de commande (5a, b) et les signaux d'état réel (9a, b) sur le modèle de simulation (11) pour déterminer les signaux d'état futur attendus (12a, b) et pour déterminer l'état de maintenance du dispositif d'accès (2a, b).

7. Procédé selon la revendication 6, dans lequel le véhicule (1) présente un agencement de mesure (7) pour produire des signaux de mesure (8a, b) en se basant sur une mesure sur le dispositif d'accès (2a, b), de préférence, les signaux d'état (9a, b) étant produits, en particulier par le dispositif de commande (6a, b), en comprenant au moins en partie les signaux de mesure (8a, b) et/ou les signaux d'état (9a, b) étant produits en se basant au moins en partie sur les signaux de mesure (8a, b).

8. Procédé selon la revendication 6 ou 7, dans lequel un programme de commande se déroule sur le dispositif de commande (8a, b), lequel, en se basant sur des signaux de rétro-couplage qui sont compris de préférence par les signaux d'état réel (9a, b), en particulier en se basant sur les signaux de mesure (8a, b), produit les signaux de commande (5a, b) pour commander l'entraînement (4a, b), plus encore de préférence, les signaux de rétro-couplage comprennent un signal de codage pour indiquer une position de l'élément mobile (3a, b), plus encore en particulier sont constitués du signal de codage.

9. Procédé selon l'une des revendications 6 à 8, dans lequel le véhicule (1) comprend une pluralité de dispositifs d'accès (2a, b) fixés au véhicule (1) avec un dispositif de commande respectif (6a, b), et les signaux de commande (5a, b) et les signaux d'état réel (9a, b) de la pluralité de dispositifs d'accès (2a, b) sont transmis à l'unité centrale de calcul (10) par le biais du réseau local pour déterminer les signaux d'état futur attendus (12a, b) et pour déterminer l'état de maintenance du dispositif d'accès (2a, b) respectif.

10. Procédé selon l'une des revendications 1 à 9, dans lequel la détermination des signaux d'état futur attendus (12a, b) s'effectue de manière cadencée, de sorte que les signaux de commande (5a, b) et les signaux d'état réel (9a, b) sont appliqués pendant une séquence d'intervalles de temps d'entrée (16a, b) et les signaux d'état futur attendus (12a, b) sont déterminés pendant une séquence d'intervalles de temps de sortie (17a, b), et les intervalles de temps de sortie (17a, b) sont respectivement décalés dans le temps, en ne se chevauchant pas de préférence, par rapport aux intervalles de temps d'entrée (16a, b) correspondants.

11. Procédé selon la revendication 10, dans lequel des écarts de pause (19) temporels respectifs sont prévus entre les intervalles de temps d'entrée (16a, b) de la séquence des intervalles de temps d'entrée (16a, b), pour les signaux de commande (5a, b) et les signaux d'état réel (9a, b), il n'y a pas d'application sur le modèle de simulation (11) pendant ces écarts de pause (19), de préférence, la durée respective des écarts de pause (19) dépasse la durée respective des intervalles de temps d'entrée (16a, b).

12. Procédé selon la revendication 11, dans lequel pour la pluralité de dispositifs d'accès (2) fixés au véhicule (1), des séquences d'intervalles de temps d'entrée (16a, b) différentes, qui ne se chevauchent pas de préférence sont prévues, en particulier, la transmission des signaux de commande (5a, b) et des signaux d'état réel (9a, b) à l'unité centrale de calcul (11) est effectuée respectivement décalée dans le temps par les dispositifs de commande (6a, b).

13. Procédé selon l'une des revendications 1 à 12, dans lequel la détermination des signaux d'état futur attendus (12a, b) par le modèle de simulation physique (11) dure plus longtemps que la production des signaux d'état réel (9a, b), de sorte que la comparaison entre les signaux d'état réel (9a, b) et les signaux d'état attendus (12a, b) correspondants s'effectue décalée dans le temps par rapport à la production des signaux d'état réel (9a, b), de préférence, les signaux d'état réel (9a, b) étant conservés en mémoire dans l'unité centrale de calcul (11) jusqu'à la détermination des signaux d'état attendus (12a, b) correspondants.

14. Procédé selon l'une des revendications 1 à 13, dans lequel les signaux de commande (5a, b) comprennent une tension moteur à appliquer sur l'entraînement électrique (4a, b), se composent de préférence de la tension moteur, et/ou les signaux de commande comprennent un courant moteur passant à travers l'entraînement électrique.

15. Procédé selon l'une des revendications 1 à 14, dans lequel l'état détecté du dispositif d'accès (2a, b) comprend un déplacement de l'élément mobile (3a, b) divisé en phases de mouvement et la comparaison entre le signal d'état réel (9a, b) et le signal d'état futur attendu (12a, b) s'effectue en se basant sur des caractéristiques de signal caractéristiques différentes respectives pour au moins une phase de mouvement.
